Europäisches Patentamt

European Patent Office

Office européen des brevets

(19)

(11) Publication number:

**0 323 859**
**A2**

## EUROPEAN PATENT APPLICATION

(12)

(21) Application number: 89100283.4

(22) Date of filing: 09.01.89

(51) Int. Cl.⁴: **G 06 K 19/06**

(30) Priority: 08.01.88 JP 1295/88

(43) Date of publication of application:
12.07.89 Bulletin 89/28

(84) Designated Contracting States:
AT BE CH DE ES FR GB GR IT LI NL SE

(71) Applicant: OMRON TATEISI ELECTRONICS CO.
10, Tsuchido-cho Hanazono Ukyo-ku
Kyoto 616 (JP)

(72) Inventor: Matsui, Kenji
c/o Omron Tateisi Electronics Co. 20, Igadera
Shimokaiinji Nagaokakyo-shi Kyoto 617 (JP)

(74) Representative: WILHELMS, KILIAN & PARTNER
Patentanwälte
Eduard-Schmid-Strasse 2
D-8000 München 90 (DE)

(54) Data storage unit in article identification system.

(57) An identification system for identifying articles such as are conveyed on a line includes a read/write control unit and a data storage unit affixed to an article to be identified and having an internal memory for storing identification data which identifies the article. Data in the internal memory is read out of the memory or data is written into the memory in response to control performed by the read/write control unit. The data storage unit of the invention includes a display device for displaying the data, and display control section for activating the display device only for a predetermined period of time when required.

Fig. Ia

EP 0 323 859 A2

**Description**

## DATA STORAGE UNIT IN ARTICLE IDENTIFICATION SYSTEM

### BACKGROUND OF THE INVENTION

1. Field of the Invention:
This invention relates to a data storage unit used in an identification system in which articles such as tools or pallets are to be identified.

2. Description of the Prior Art:
In an article identification system known in the art, a data storage unit referred to as a "data carrier" having an internal semiconductor memory such as an EE PROM or SRAM is affixed to a travelling article to be identified (a tool or a conveyed part), while a read/write control controller is disposed on a conveyor line and is approached by the conveyed article bearing the data storage unit. When the article reaches the vicinity of the read/write controller, the latter receives a command from a host computer and executes read processing to read data out of the data storage unit or write processing to write data into the data storage unit.

In the prior-art identification system described above, the data storage unit is not equipped with a display function.

Consequently, when the host computer or controller is installed remote from the site, namely the location at which the data storage unit is affixed, the operator has no way of knowing what data has been read or written at the site. In addition, the operator is incapable of differentiating among data storage units having the same external appearance. Moreover, data storage units affixed to a plurality of articles having the same external appearance and the same color cannot be distinguished from one another without assistance.

In order to eliminate these shortcomings, the data storage unit should be provided with a display device for displaying the data. However, merely providing the storage unit with a display device that remains lit at all times results in excessive power consumption by the device. If the device is of the type that has an internal battery, therefore, the battery will be expended in short order and the service life of the data storage unit will be greatly curtailed.

### SUMMARY OF THE INVENTION

The present invention has been devised in view of the foregoing problems and its object is to provide a data storage unit in which the data stored in a memory can be visually confirmed from outside the unit without shortening the service life of the unit.

The present invention relates to an identification system comprising a read/write control unit, and a data storage unit affixed to an article to be identified and having an internal memory for storing identification data which identifies the article, wherein data in the internal memory is read out of the memory or data is written into the memory in response to control performed by the read/write control unit. The data storage unit according to the present invention includes a display device for displaying the data, and display control means for activating the display device only for a predetermined period of time when required.

With the data storage unit of the present invention, the data is displayed on the display device when memory read processing or write processing is performed by the read/write control unit, at at any other time when display is required. This makes it possible for the operator to distinguish the data storage unit itself merely by looking at the display. Moreover, the display is presented only for a prescribed period of time by actuating means which includes a timer, switch or the like, by way of example. Since the display device does not remain activated at all times, power consumed by the display is minimized.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

Fig. 1a is an external perspective view of a data carrier embodying the present invention;
Fig. 1b is an external perspective view of a data carrier illustrative of another embodiment of the present invention;
Fig. 2 is a block diagram of an article identification system to which the present invention is applied;
Fig. 3a is a partial top view of the data carrier shown in Fig. 1a;
Fig. 3b is a partial sectional view of the same;

Fig. 4 is a block diagram illustrating the circuitry of the data carrier of the embodiment; and
Figs. 5a, 5b are views illustrating examples of displays presented by the data carrier of the embodiment.

DESCRIPTION OF THE PREFERRED EMBODIMENTS

Embodiments of the present invention will now be described in detail.

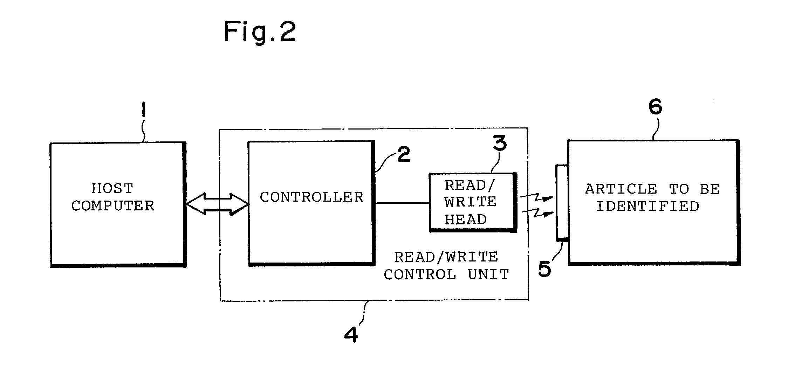

Fig. 2 is a block diagram illustrating the arrangement of an article identification system to which the present invention is applied.

The article identification system comprises a host computer 1, a read/write control unit 4 which includes a controller 2 and a read/write head 3, and a data carrier 5 affixed to an article 6 to be identified.

The article identification system is such that, in response to a command from the host computer 1, the controller 2 accesses the memory of the data carrier 5 via the read/write head 3 to read or write data.

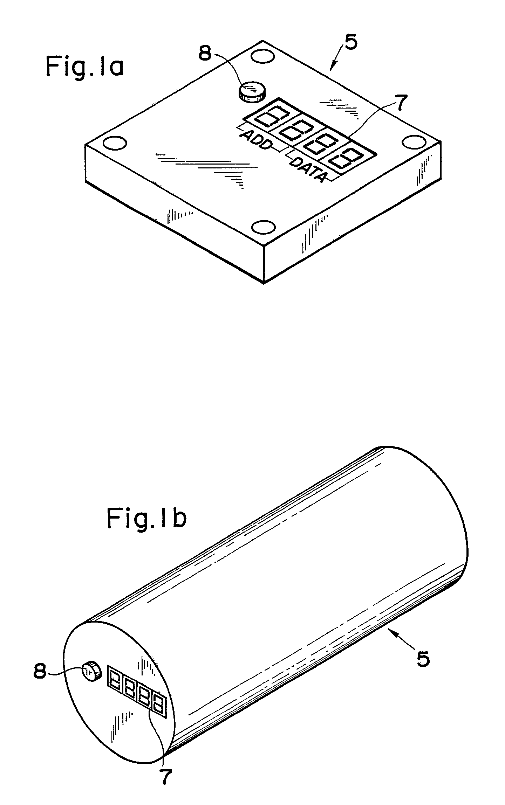

In the present embodiment, the data carrier 5 is of a rectangular type, as shown in Fig. 1a, and is equipped with a four-digit digital display device 7 which displays a two-digit address and two-digit data, and a display selection switch 8 for activating and deactivating the display device 7. Of course, the data carrier 5 is not limited to that of a rectangular type, and other configurations can be employed depending upon the type of article 6 to be identified. One example is a cylindrical-type data carrier of the kind shown in Fig. 1b.

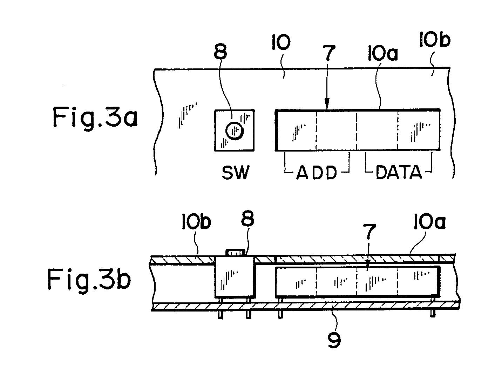

As shown in Fig. 3b, the digital display device 7 and display selection switch 8 are mounted on a printed circuit board 9 within the data carrier 5. Also, though not illustrated in Fig. 3b, other circuit components are mounted on the board and molded in resin along with a battery. In order to render the structure waterproof and exposure-proof, only the portion 10a at which the display device 7 is disposed is transparent, as shown in Figs. 3a and 3b, and the remaining portion 10b is covered with an opaque sheet 10. Though the display selection switch 8 employs a push-button in the illustrated embodiment, the invention is not limited thereto, for a switch of another type, such as a touch switch using a strip of electrically conductive rubber, can be adopted as the display selection switch.

The digital display device 7 is activated to produce a display only for a fixed period of time when read or write processing is executed or only when the display selection switch 8 is pressed; at all other times the digital display device 7 is in the deactivated state and does not produce a display.

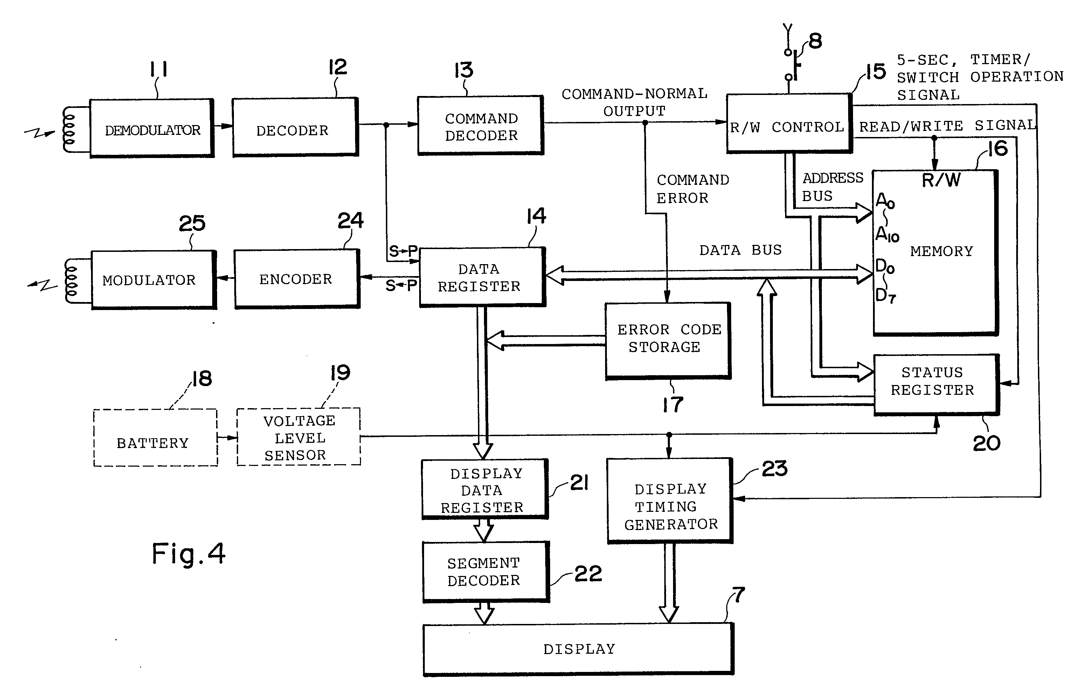

Fig. 4 is a block diagram illustrating the circuit arrangement of the data carrier 5. The circuitry of the data carrier 5 comprises a demodulator circuit 11 for demodulating a transmitted command from the read/write head 3 in contactless, electromagnetic fashion; a decoding circuit 12 for converting the demodulated signal into a digital signal; a command decoder 13 which receives the digital signal and decodes the command; a data register 14 for subjecting the digital signal obtained at reception to a serial-to-parallel conversion, and for subjecting response data transmitted in the direction of the read/write head 3 to a parallel-to-serial conversion; a read/write control circuit 15 which, in response to a command-normal output decoded by the command decoder 13, and in accordance with the on/off state of the display selection switch 8, outputs a corresponding control signal; a memory 16 which, in response to the control signal from the read/write control circuit 15, writes data from the data register 14 into an address designated by the control cicuit 15 or reads data from a designated address to the data register 14; an error code storing circuit 17 which stores error codes and, in response to a command error outputted by the command decoder 13, outputs the corresponding error code a battery 18 for supplying each of the circuit components with power supply voltage; a battery level sensing circuit 19 for sensing that the voltage of battery 18 has fallen below a predetermined level; a status register 20 which receives the control signal from the read/write control circuit 15 and a signal from the battery level sensing circuit 19 and, in response thereto, stores the status of the data carrier; a display data register 21 for temporarily storing the data from the data register 14 in order to display the same; a segment decoder 22; a display timing generator circuit 23; an encoding circuit 24 for encoding the serial digital data outputted by the data register 14; and a modulator circuit 25 for modulating the encoded signal and transmitting it in the direction of the read/write head 3.

The format of the command transmitted by the controller 2 and received via the read/write head 3 is as follows:

| COMMAND CODE | NUMBER OF BYTES | LEADING ADDRESS | DATA |
|---|---|---|---|

The data is included along with a write command only and not with a read command.
Conversely, the format of a response returned from the data carrier 5 to the controller 2 is as follows:

| COMMAND CODE | STATUS | DATA |
| --- | --- | --- |

Here the data is included along with a read response only and not with a write response.

Control signals delivered by the read/write control circuit 15 include a five-second timer signal applied to the display timing generator circuit 23 and a read/write signal applied to the memory 16 and status register 20. The read/write control circuit 15 applies address signals $A_0$ - $A_{10}$ to the memory 16 and status register 20. The data in the status register 20 is transferred to the data register 14 and memory 16 via a data bus, data is written from the data register 14 to the memory 16 via the data bus, and data is read from memory 16 to data register 14 via the data bus.

The operation of the data carrier 5 in the article identification system of the illustrated embodiment will now be described.

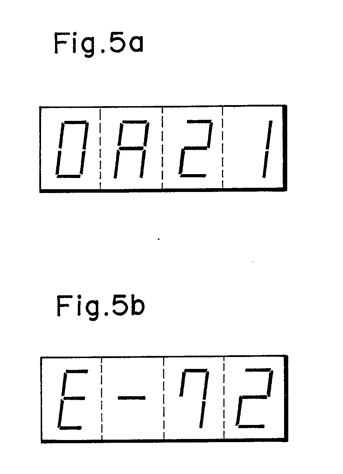

First, in a case where the host computer 1 transmits a command via the controller 2 and read/write head 3, the command is received and fed into the command decoder 13 via the demodulator circuit 11 and decoding circuit 12 and is decoded by the decoder 13. If the command is normal, the read/write control circuit 15 starts the five-second timer, in response to which the display timing generator circuit 23 is actuated. If the command is a write command, the write data stored in the data register 14 is written into the memory 16 at the address designated by the read/write control circuit 15. At this time the write data in the data register 14 is transferred to and stored in the display data register 21. At completion of the transfer and storage of the data, the data in the display data register 21 is displayed on the display device 7 until the next new command arrives. An example of a display is shown in Fig. 5a. In this example, the data "21" is written at address "OA".

If the next command is received before the elapse of five seconds, the five-second timer is reset and the display device continues presenting a display. However, if no command arrives even after five seconds of time passes, the five-second timer runs out of time and the display timing generator circuit 23 is deactivated, thereby deactivating the display device 7.

If the command is a read command, an address of the memory 16 is designated by the read/write control circuit 15 and the data stored at this address is read. A read response, which includes the read data, is transmitted to the side of controller 2 via the data register 14, encoding circuit 24 and modulator circuit 25. The read data prevailing at this time is transferred from the data register 14 to the display data register 21, where the data is stored. The data is displayed on the display device 7 in the manner set forth above. The operation of the five-second timer is the same as in the case of write processing, so that the read data is displayed on the display device 7 for five seconds.

If the result of decoding a command by the command decoder 13 is the generation of a command reception error, the memory 16 is not subjected to read/write processing, in which case an error code corresponding to the error mode is read out of the error code storing circuit 17 and transferred to the display data register 21, where the error code is stored. The code is displayed on the display device 7. An example of this display is shown in Fig. 5b. In this example, "E" indicating an error is displayed, along with an error code "72".

If the display selection switch 8 is pressed, data will be displayed on the display device 7 even if a command is not received from the host computer 1. When the display selection switch 8 is closed, the read/write control circuit 15 responds by designating the leading address of the memory 16 and applying a switch operation signal to the display timing generator circuit 23 to place the latter in operation. The data at the designated or leading address of the memory 16 is read and transferred, for storage, to the display data register 21 via the data register 14. At completion of transfer and storage, the data in the display data register 21 is displayed on the display device 7. This display continues as long as the display selection switch 8 is closed. When the display selection switch 8 is opened, the display timing generator circuit 23 is deactivated and, hence, the display is extinguished. By repeatedly executing this on/off operation of the display selection switch 8, the address of memory 16 is successively incremented so that the data in memory 16 is sequentially read and displayed on the display device 7. As a result, by pressing the display selection switch 8 at the site, the operator is capable of directly reading the contents in memory 16 of data carrier 5 at any time.

If the voltage of battery 18 falls below a level at which normal operation of the data carrier 5 is assured, this is sensed by the battery level sensing circuit 19, which responds by applying an alarm signal to the display timing generator circuit 23. The latter changes the display timing period conforming to the alarm signal during operation of the display, thereby blanking the display presented on the display device 7. In other words, the display is made to flash. The flashing display notifies the operator of the fact that the battery of the data carrier is approaching the ends of its service life.

Thus, in accordance with the present invention, a data storage unit is equipped with a data display device. This makes it possible to visually confirm read or written data and to distinguish among a plurality of articles to be identified even when the articles have the same external shape and the same color. Likewise, it is possible to distinguish among data storage units having the same external shape. Furthermore, the storage unit is provided with means for activating the data display device only for a

EP 0 323 859 A2

prescribed period of time when necessary. When display is not required, therefore, the data display device is extinguished. This feature makes it possible to obtain the above-described visual confirmation function while minimizing power consumption.

As many apparently widely different embodiments of the present invention can be made without departing from the spirit and scope thereof, it is to be understood that the invention is not limited to the specific embodiments thereof except as defined in the appended claims.

**Claims**

1. In an identification system including a read/write control unit, and a data storage unit affixed to an article to be identified and having an internal memory for storing identification data which identifies the article, wherein data in said internal memory is read out of said memory or data is written into said memory in response to control performed by said read/write control unit, a data storage unit comprising:
display means for displaying the data; and
display control means for activating said display means only for a predetermined period of time when required.

2. The data storage unit according to claim 1, wherein said display control means includes a timer which clocks a fixed period of time when data is written into or read from said memory, said display means being activated during said fixed time period to display data that is to be written into said memory or data that has been read out of said memory.

3. The data storage unit according to claim 1, wherein said display control means includes a display selection switch, predetermined data being displayed on said display means while said display selection switch is on.

5

Fig.1a

Fig.1b

Fig.2

Fig.3a

SW    └ADD┘ └DATA┘

Fig.3b

Fig. 4

Fig.5a

Fig.5b